# EUROPÄISCHE PATENTSCHRIFT

(11) **EP 3 812 885 B1**
(45) Veröffentlichungstag und Bekanntmachung des Hinweises auf die Patenterteilung: **06.08.2025**
(21) Anmeldenummer: 19205062.3
(22) Anmeldetag: 24.10.2019
(51) Int. Cl.: G06F 8/35, G06F 11/3668

(54) **INTEGRIERTE SIMULATIONSCODE- UND PRODUKTIONSCODEGENERIERUNG**
INTEGRATED SIMULATION CODE AND PRODUCTION CODE GENERATION
GÉNÉRATION INTÉGRÉE DU CODE DE SIMULATION ET DU CODE DE PRODUCTION

(43) Veröffentlichungstag der Anmeldung: 28.04.2021
(73) Patentinhaber: dSPACE GmbH, 33102 Paderborn (DE)
(72) Erfinder: Moors, Sebastian, 33102 Paderborn (DE); Hein, Renata, 33102 Paderborn (DE); Eisemann, Ulrich, 45478 Mülheim (DE)

(56) Entgegenhaltungen:
- US-A1- 2006 010 429

## Beschreibung

Die vorliegende Erfindung betrifft die modellbasierte Entwicklung und das modellbasierte Testen von Programmen, insbesondere Steuerprogrammen für Steuergeräte. Insbesondere betrifft die vorliegende Erfindung ein Verfahren und einen Codegenerator zum Erzeugen von Quellcode aus einem Modell eines Programms, beispielsweise eines Steuerprogramms, wobei der Quellcode sowohl Simulationscodeanteile zum Testen des Modells als auch auf dem Steuergerät ausführbare Produktionscodeanteile umfasst. Ferner betrifft die Erfindung eine Testumgebung zum Testen von Modellen für Steuerprogramme.

Die modellbasierte Entwicklung und das modellbasierte Testen von technischen Systemen hat sich in vielen Entwicklungsprozessen über viele Anwendungen hinweg etabliert, wie beispielsweise bei der Entwicklung von Steuerprogrammen, insbesondere für Steuergeräte im Automotivebereich. Modellbasierte Entwicklung bietet die Möglichkeit, technische Systeme auf einer hohen Abstraktionsebene graphisch zu modellieren anstatt diese programmieren zu müssen. Der eigentliche Quellcode wird nicht mehr manuell programmiert, sondern weitgehend automatisch aus dem Modell generiert, wodurch nicht mehr der Code, sondern das Modell im Mittelpunkt der Entwicklung steht.

Die Produktionscode-Generierung ist der logische Schritt für das Überführen von Modellen in effizienten, serienreifen Code. Ein Beispiel einer solchen modellbasierten Umgebung ist TargetLink. TargetLink generiert hocheffizienten Produktionscode als C-Code direkt aus MATLAB/Simulink bzw. Stateflow und erlaubt die frühe Verifikation durch Integration von Simulation und Test. TargetLink unterstützt die effiziente modulare Entwicklung, ist für ISO 26262, ISO 25119 und IEC 61508 zertifiziert und bietet leistungsstarke native AUTOSAR-Unterstützung.

Obwohl automatische Code-Generatoren im Vergleich zu manueller Programmierung die Fehlerrate reduzieren, müssen sowohl der generierte Code als auch die zugrundeliegende Spezifikation, beziehungsweise das Modell, getestet werden.

Die US 2006/0010429 A1 offenbart ein Verfahren für eine modellbasierte Softwareentwicklung mit einer Testfallgenerierung und Auswertung. Hierbei wird ein aus einer Modelldefinition des Eingangsdaten verarbeitenden Steuerprozesses erzeugter Quellcode abgerufen. Weiterhin wird Modellinformation der Modelldefinition abgerufen und der Testfall basierend auf dem Quellcode und der Modellinformation generiert.

Die in obiger Weise entwickelten Steuerprogramme sind üblicherweise keine standalone Programme, sondern treten mit externen Komponenten (Software- und/oder Hardwarekomponenten) in Wechselwirkung.

So kann es, beispielsweise bei der Entwicklung von AUTOSAR-Software, vorkommen, dass ein erstes Runnable einer Softwarekomponente (SWC) mit einem zweiten Runnable Daten austauscht, wobei das zweite Runnable innerhalb der ersten SWC oder in einer zweiten SWC angeordnet sein kann. Hierbei kann eine parallele Ausführung der beiden Runnables Seiteneffekte verursachen, welche aktuell nicht in Simulink abgedeckt sind. Weil die externen Softwarekomponenten vielfach erst in späteren Entwicklungsphasen verfügbar sind, ist ein frühzeitiger Test des Steuerprogramms nicht oder nur eingeschränkt möglich.

Auch hardwareabhängige technische Effekte, die sich aus dem Zusammenwirken der Produktionssoftware mit externen Hardwarekomponenten ergeben, sind üblicherweise in einem frühen Entwicklungsstadium nicht in dem Modell abgedeckt. Auch hier ist die Entwicklung und die Realisierung der externen Hardwarekomponenten nicht bekannt, wodurch ein frühzeitiges Testen der Produktionssoftware nicht oder nur eingeschränkt möglich ist.

Um frühzeitig einen Test mit entsprechender Abdeckung zu erreichen, sollte es Möglichkeiten geben, innerhalb eines Modells "externe" Signale einzuspeisen, so dass eine Parallelität der Ausführung unter Emulierung externer Komponenten simuliert werden kann, indem Seiteneffekte, die aus der Interaktion mit externen Komponenten entstehen, gezielt modelliert werden. Zusätzlich zur Möglichkeit, externe Signale zu Testzwecken in das Modell einzuspeisen, ist es auch wünschenswert, Signalwerte aus dem Modell "herauszutunneln" beziehungsweise auszublenden, insbesondere dann, wenn fehlende Modell- und Code-Anteile zu Testzwecken durch "Stubs" realisiert werden, die während der Simulation auf geeignete Weise simuliert werden müssen.

Insofern ist es die Aufgabe der vorliegenden Erfindung, eine Modellierungs- und Testumgebung bereitzustellen, die die oben genannten Nachteile überwindet.

Der Erfindung liegt die Erkenntnis zugrunde, dass diese Aufgabe gelöst werden kann, indem einzelne Blöcke als Simulationscode attributiert werden können. Die als Simulationscode attributierten Blöcke können neben den Produktionscode-Blöcken an verschiedenen Stellen platziert werden. Der Codegenerator generiert dann je nach Attributierung Produktionscode oder Simulationscode aus dem entsprechenden Block bzw. einer Gruppe von Blöcken. Somit kann aus einem vorhandenen Modell in einem einzelnen Durchlauf sowohl Produktionscode als auch Simulationscode generiert werden, wobei der Simulationscode temporär für Testzwecke verwendet wird und aus dem Produktionscode entfernt werden kann, bevor letzterer kompiliert und auf dem Steuergerät ausgeführt wird.

Gelöst wird diese Aufgabe durch ein Verfahren und eine Testumgebung gemäß den unabhängigen Ansprüchen. Die davon abhängigen Ansprüche spezifizieren vorteilhafte Ausgestaltungen und Weiterbildungen der Erfindung. In einem ersten Aspekt der Erfindung wird ein Verfahren zum Erzeugen von Quellcode aus einem Modell gemäß Anspruch 1 bereitgestellt.

Indem Modellblöcke mit einem zusätzlichen Attribut als Simulationscode-Blöcke versehen werden, können solche attributierten Blöcke zur Simulation genutzt werden. Bei der Erzeugung von Quellcode erfolgt die Ausgabe des Simulationscodes aber von dem Produktionscode abtrennbar. Somit kann der Nutzer durch das Einfügen von entsprechend attributierten Blöcken im Modell ein Ersatzverhalten von externen Komponenten emulieren und dadurch ein Testen des Modells mit hoher Abdeckung ermöglichen.

So ermöglicht es das erfindungsgemäße Verfahren, im Modell ein Testsignal zu injizieren oder eine zwischen zwei Aufrufen eines AUTOSAR-Runnables stattfindende Änderung eines Datenelements auszulösen. Weiterhin können Änderungen innerhalb eines Zeitschritts oder das Auftreten von Interrupts mit SimulationscodeBlöcken modelliert werden. Da diese Anteile im erzeugten Quellcode getrennt von dem Produktionscodeanteil sind, kann der erzeugte Produktionscode auch im Steuergerät verwendet werden, ohne dass eine erneute Codegenerierung oder Änderung des Modells erforderlich ist.

Durch das erfindungsgemäße Verfahren wird eine Modellierungsumgebung bereitgestellt, die ein Simulieren und Testen von Modellen für Produktionscode ermöglicht, insbesondere für Produktionscode, welcher in einem technischen System, beispielsweise einem Steuergerät, mit externen Software- und/ oder Hardwarekomponenten verknüpft ist, deren genaue Implementierung erst zu einem späteren Zeitpunkt festgelegt wird.

Das erfindungsgemäße Verfahren ermöglicht es, innerhalb eines einzelnen Durchlaufs des Codegenerators sowohl Simulationscode als auch Produktionscode zu generieren.

Vorzugsweise wird der Simulationscode mittels Präprozessor-Anweisungen in dem Quellcode integriert.

Durch Integration der Simulationscodeanteile mittels Präprozessor-Anweisungen in dem Quellcode, wie beispielsweise mittels eines Präprozessor-Makros, können die entsprechenden Anweisungen von einem Präprozessor an den betreffenden Stellen im Quellcode eingefügt bzw. beibehalten oder entfernt werden. Die Simulationscodeanteile können somit - geklammert durch Präprozessor-Anweisungen -- im Gesamtcode verbleiben und werden erst im Rahmen der Kompilierung für das Steuergerät entfernt. Dadurch wird sichergestellt, dass die Codegenerierung für den Produktionscode möglichst identisch mit der Testversion ist, wodurch ein konsistentes Verhalten sowohl bei der Simulation als auch für den finalen Produktionscode auf dem Steuergerät gewährleistet wird.

Die abtrennbare Integration von Simulationscode und Produktionscode in dem Quellcode kann beispielsweise mittels Konstrukten der bedingten Kompilierung realisiert werden. So kann beispielsweise mittels der Anweisung #ifdef eine Implementierung einer externen Funktion geklammert werden, und somit rückstandsfrei aus dem Quellcode entfernt werden. Weitere bekannte Präprozessor-Anweisungen, wie beispielsweise #include oder #define, können hierzu ebenfalls zum Einsatz kommen.

Obige Vorgehensweise ermöglicht, dass der Simulationscode immer an Ort und Stelle verbleibt und lediglich bei Kompilierung des Produktionscodes verworfen wird.

Vorzugsweise kann der Simulationscode von dem Produktionscode getrennt in einem Code-Modul oder einer Code-Datei hinterlegt werden.

Durch Verlagern der Simulationscodeanteile in eigenen Code-Modulen, kann eine Trennung zwischen Simulationscode und Produktionscode bereits auf Dateiebene realisiert werden. Dadurch wird die Gefahr von Inkonsistenzen bei der Codegenerierung vermieden, da ein einziger Durchlauf der Codegenerierung ausreichend ist, um sowohl Code für eine Software-in-the-Loop Simulation als auch Code für die Verwendung im finalen Steuergerät zu generieren. Des Weiteren wird durch die klare Abtrennung beider Codeanteile gewährleistet, dass keine Simulationscodeanteile im finalen Produktionscode enthalten sind.

Das Verfahren umfasst weiter den Schritt des Durchführens einer Software-in-the-Loop Simulation, unter Berücksichtigung der Simulationscodes.

Eine Software-in-the-Loop Simulation ermöglicht ein schnelles und effizientes Testen des Produktionscodes.

Vorzugsweise kann für das gesamte Modell oder für bestimmte Modellblöcke eine Model-in-the-Loop-Simulation durchgeführt werden. Mit einer Model-in-the-Loop-Simulation kann die Korrektheit auf Modellebene überprüft werden, also geprüft werden, ob die während der Simulation ausgeführten Blöcke tatsächlich das beabsichtigte Verhalten des Steuerprogramms beschreiben. Außerdem kann ein erster Anteil des Modells in einem Model-in-the-Loop-Modus simuliert werden, z.B. um eine Regelstrecke zu beschreiben, während simultan ein zweiter Anteil des Modells in einem Software-in-the-Loop-Modus simuliert wird. Der zweite Anteil kann Produktionscode und/oder Simulationscode enthalten.

Das Verfahren umfasst weiter den Schritt des Verwerfens des Simulationscodes und Kompilierens des Produktionscodes zum Ausführen auf einem Prozessor eines Steuergeräts. Das Ausführen kann zu einem beliebigen Zeitpunkt erfolgen, wenn der kompilierte Code zunächst auf einem nichtflüchtigen Speicher des Steuergeräts hinterlegt wird.

Vorzugsweise umfasst ein mit einem Simulationscode-Attribut gekennzeichneter Block mindestens ein weiteres Attribut, das bei der Generierung von Simulationscode berücksichtigt wird. So können mehrere Attribute eingesetzt werden, die je nach Zweck die Simulationscodeanteile unterscheiden, so dass z.B. zwischen Logging (Wert lesen) oder Wertvorgabe (Wert schreiben) unterschieden werden kann. Somit lassen sich innerhalb des Simulationscodes Varianten bzw. verschiedene Arten von Simulationscode unterscheiden. Insbesondere kann je nach Funktion zwischen Signalinjektion, Debug/Assert und Logging unterschieden werden. Dann kann auch vorgesehen sein, beispielsweise nur den Simulationscode für Loggingblöcke einzuschalten. Eine flexible und effiziente Simulation wird dadurch erreicht.

Vorzugsweise umfasst der Schritt des Generierens von Simulationscode einen Codeoptimierungsschritt unter Berücksichtigung des mindestens eines weiteren Attributs. Dadurch können Simulationsode-Attribut(e) ausgelesen werden, um Eigenschaften (besonders bezüglich der Optimierung des Codes) bei der Codegenerierung entsprechend zu setzen. So lässt sich beispielsweise der Simulationscode auf Lesbarkeit optimieren, insbesondere indem keine Variablen eliminiert werden.

Vorzugsweise wird ein Block mit einem Simulationscode-Attribut versehen, wenn der Block einen Aspekt einer mit dem Programm in Wechselwirkung tretenden Komponente und/oder äußere Einflüsse auf das Programm spezifiziert, wobei der aus dem Block generierte Simulationscode den Aspekt der Komponente und/oder die äußeren Einflüsse auf das Programm emuliert. Ein solcher Block kann somit das Verhalten einer externen Komponente aber auch beliebige äußere Einflüsse auf das Programm modellieren. Darüber hinaus kann eine Gruppe von Blöcken das Verhalten modellieren, dann würde jeder einzelne Block als Simulationscodeblock attributiert werden.

Vorzugsweise umfasst der Schritt des Generierens von Simulationscode ein Generieren einer Stub-Funktion aus dem spezifizierten Verhalten der Komponente, wobei die Stub-Funktion die mit dem Programm in Wechselwirkung tretende Komponente durch den entsprechenden Simulationscode emuliert.

Die zusätzliche Attributierung der Blöcke als Simulationscodeblöcke kann vorzugsweise dazu genutzt werden, eine Komponente, beispielsweise eine parallel ausgeführte SW Komponente, insbesondere einen I/O-Treiber, zu simulieren, deren konkrete Implementierung zunächst unbekannt ist und erst in einer späteren Entwicklungsphase festgelegt wird. Mit anderen Worten wird ein Block oder eine Gruppe bestehend aus einer Mehrzahl von Blöcken eine Komponente ersetzen. Beispielsweise könnte dies ein Block zum Verändern eines Variablenwerts sein ("Data Store Write", DSW), der ein Ersatzverhalten einer SW-Komponente emuliert/modelliert, die Werte bestimmter Programmvariablen verändert oder auch ein Block, der einen Aufruf einer Software-Komponente modelliert. Dies ermöglicht eine Simulation des Programms auch dann durchzuführen, wenn die Softwareumgebung, in der das Programm ausgeführt wird, noch nicht implementiert ist.

Eine Stub-Funktion bezeichnet in der Softwareentwicklung einen Programmcode, der anstelle eines anderen Programmcodes steht. Dabei ist der eigentliche Programmcode, der durch den Stub ersetzt wird, noch nicht entwickelt. Die Stub-Funktion emuliert somit ein Ersatzverhalten einer Komponente, die in Wechselwirkung mit dem Programm steht. Durch das Emulieren einer Komponente mittels einer Stub-Funktion wird somit ein rudimentäres Verhalten der Komponente im Modell beschrieben, wodurch ein Testen des Produktionscodes in einer frühen Entwicklungsphase ermöglicht wird, in der die genaue Implementierung der Komponente noch nicht bekannt ist. So kann beispielsweise ein I/O Treiber durch die generierte Stub-Funktion temporär zu Simulationszwecken berücksichtigt werden.

Vorzugsweise umfasst der Schritt des Generierens von Simulationscode ein Generieren von Funktionsaufrufen zum Transformieren eines Eingangssignals. Dabei können die Funktionsaufrufe unterschiedliche Algorithmen modellieren, welche das Eingangssignal transformieren. Dadurch können Eingangssignale, deren Werte sich innerhalb eines Abtastschritts ändern effizient simuliert werden.

Durch Einfügen von entsprechend attributierten Blöcken im Modell lässt sich somit ein Testsignal injizieren, um Variablen und/oder Parameter des Modells von außen verändern zu können. Dabei erfolgt die Signalinjektion über den als Simulationscode attributierten Block, wobei die Signalinjektion nicht durch Signale angezeigt wird. Die Signalinjektion kann beispielsweise auch dazu eingesetzt werden, mittels eines Konstanten-Blocks einen Wert für den Produktionscode vorzugeben. In diesem Fall weist der als Simulationscode attributierte Block nur einen Ausgang auf.

Vorzugsweise ersetzt der Simulationscode Funktionsaufrufe zum Zuweisen eines Wertes einer in dem Produktionscode vorkommenden lokalen Variablen. Dabei kann die Wertzuweisung sowohl ein Initialisieren als auch ein Verändern eines vorhandenen Wertes umfassen.

Dadurch wird eine flexible Simulationsumgebung bereitgestellt, die es ermöglicht, in jedem Simulationsschritt den Wert einer Variable und/oder eines Parameters flexibel verändern zu können.

Vorzugsweise enthält der Simulationscode eine globale Simulationsvariable, deren Wert durch einen in dem Produktionscode berechneten Wert einer lokalen Variablen bestimmt wird. Dies ermöglicht ein Messen bzw. Loggen des Signals für eine spätere Auswertung bzw. Debugging.

Vorzugsweise enthält der Produktionscode eine lokale Variable, deren Wert durch einen in dem Simulationscode berechneten Wert einer globalen Variable bestimmt wird. Dies ermöglicht ein Lessen beziehungsweise Schreiben von lokalen Variablen.

Vorzugsweise umfasst der Simulationscode ein Initialisierungsmodul, das Parameter und/oder Variablen der emulierten Komponente initialisiert, und ein Funktionsmodul, welches Funktionen, insbesondere Stub-Funktionen, der emulierten Komponente enthält, wobei Funktionsaufrufe (z.B. einer oder mehrerer Stub-Funktionen) im Produktionscode erfolgen.

Vorzugsweise umfasst das Initialisierungsmodul eine indexbasierte Datenstruktur, insbesondere einen Array, wobei die Datenstruktur eine Mehrzahl von Werten einer Variablen definiert, wobei bei jedem Funktionsaufruf einer Stub-Funktion in dem Produktionscode über den Index auf einzelne Werte der Variable zugegriffen wird.

Durch die Verwendung einer indexbasierten Datenstruktur, lassen sich mehrere Aufrufe einer Komponente im Simulationscode effizient gestalten.

Damit die Modellierung der Testfälle möglichst reibungslos erfolgt, wird zweckmäßigerweise eine Korrektheitsprüfung durchgeführt. Das Modell wird als korrekt angesehen, wenn eine durchgehende Signallinie innerhalb einer Hierarchieebene übereinstimmende Markierungen der Blöcke als Simulationscode-Blöcke, d.h. Blöcke deren Simulationscode-Attribute gesetzt sind, aufweist. Dabei bezieht sich eine Signallinie auf die beispielsweise aus Simulink bekannte Signallinie, die den Ausgang eines ersten Blocks mit dem Eingang eines nachfolgenden zweiten Blocks verbindet und anzeigt, dass der Signaleingang des zweiten Blocks von dem Signalausgang des ersten Blocks abhängt. Sollte der erste Block als Simulationsblock gekennzeichnet sein, müsste auch der zweite Block ebenfalls als solcher attributiert werden, da beide Blöcke Aspekte des Ersatzverhaltens einer externen Komponente modellieren.

Vorzugsweise umfasst das Verfahren weiter die Schritte des Überprüfens, ausgehend von einem ein Simulationscode-Attribut umfassenden ersten Block, ob alle aufeinanderfolgenden Blöcke entlang einer von dem ersten Block ausgehenden Simulationslinie Simulationscode-Attribute umfassen, und des Generierens einer Fehlermeldung, falls das Simulationscode-Attribut eines Blocks nicht gesetzt ist. Dabei kann die Überprüfung an einem als Übergangsblock markierten Block entlang der Simulationslinie stoppen.

Eine Simulationslinie kann dabei einer aus Simulink bekannten Signallinie entsprechen, die Blöcke innerhalb einer Hierarchieebene verbindet. Somit wird sichergestellt, dass Signalverbindungen nur zwischen Simulationscode-Anteilen auftreten (diese können prinzipiell auch in verschiedenen Subsystemen sein). Dies vermeidet schwer auffindbare Fehler, wenn einzelne Bestandteile nicht als Simulationscode gekennzeichnet sind und daher beispielsweise eine Wertzuweisung fälschlich im Produktionscode verbleibt.

Darüber hinaus kann auch vorgesehen werden, dass die Blöcke entlang der Simulations- oder Signallinien, die fälschlicherweise kein Simulationscode-Attribut aufweisen, automatisch mit einem solchen belegt werden.

Für eine einfache Bedienung kann auch vorgesehen sein, dass eine Gruppe von Blöcken ausgewählt und für alle gewählten Blöcke das Simulationscode-Attribut gleich eingestellt werden kann. Alternativ ist es auch denkbar, eine Rückwärtspropagation ausgehend von einem als Simulationscode markierten Zielblock (bzw. des mit dem zu stimulierenden Eingang verknüpften Ausgangsports) durchzuführen. Hierbei werden alle durchlaufenen Blöcke solange als Simulationscode-Blöcke markiert, bis man an einen Block gelangt, der eine Grenze markiert.

Vorzugsweise können bestimmte Blöcke, auch Übergangsblöcke genannt, denen eine fest voreingestellte Eigenschaft als Produktionscode-Blöcke zugewiesen wurde, eine Grenze zwischen Simulations- und Produktionscodeanteilen im Modell bilden.

Übergangsblöcke können beispielsweise aus der TargetLink Blockbibliothek ausgewählt werden und können zusätzliche Daten zur Codegenerierung, wie z.B. die Skalierungsinformationen für Fixpunktvariablen, Variablenklassen, Variablennamen, etc. enthalten. Für die Codegenerierung können alle Produktionscode-Blöcke mit einer individuellen Skalierung versehen sein. Diese Blöcke enthalten dann auch die hier genannten zusätzlichen Daten zur Codegenerierung. Blockbibliotheken können insbesondere vordefinierte, zusammengesetzte Blöcke enthalten.

Denkbar ist jedoch auch die Grenze zwischen den Simulations- und Produktionsanteilen ohne dedizierte Übergangsblöcke zu kennzeichnen, beispielsweise indem ein In-Port oder ein Out-Port als Übergangsblock angesehen wird. Für bessere Lesbarkeit ist jedoch das Einsetzen eines dedizierten Übergangsblocks vorteilhaft.

Gemäß einem dritten Aspekt betrifft die Erfindung eine Testumgebung zum Testen von Modellen für Steuerprogramme gemäß Anspruch 13.

Für die Generierung von Simulationscode können Codegeneratoren, wie üblicherweise für die Produktionscodegenerierung eingesetzt, verwendet werden. Jedoch soll die Möglichkeit bestehen, Simulationscode nicht auf dieselbe Weise wie Produktionscode zu optimieren, da es z.B. nicht immer sinnvoll ist, Variablen "wegzuoptimieren". Codegeneratoren mit flexiblen Optionen der Optimierung ermöglichen z.B. zu unterscheiden, ob eine Variable entfallen darf oder nicht. Das Simulationscode-Attribut ermöglicht einen vorgegebenen Satz von Optimierungsoptionen auszuwählen. In Verbindung damit können daher auch unterschiedliche Optimierungen innerhalb des Simulationscodes angewandt werden. So können beispielsweise bestimmte Variablen, die sich auf Messgrößen beziehen, für Prototyping eine wesentliche Rolle spielen, und sollten daher im Simulationscode berücksichtigt werden. Für eine Optimierung des Simulationscodes könnte daher der Fokus eher auf Lesbarkeit liegen, und weniger auf maximaler Ausführungsgeschwindigkeit, wie es üblicherweise für Produktionscode der Fall ist.

Weitere Merkmale und Vorteile der Erfindung ergeben sich aus der folgenden Beschreibung erfindungsgemäßer Ausführungsbeispiele sowie weiteren Ausführungsalternativen im Zusammenhang mit den folgenden Zeichnungen, die zeigen:
- Figur 1: eine schematische Ansicht der erfindungsgemäßen modellbasierten Umgebung zum Entwickeln und Testen von Programmen;
- Figur 2: ein Blockdiagramm des erfindungsgemäßen Verfahrens zum Generieren von Quellcode umfassend Simulationscode und Produktionscode;
- Figur 3: eine Ausführungsform der Erfindung zur Simulation der Wechselwirkung zwischen einem AUTOSAR Modell und einem parallel ausgeführten Runnable einer weiteren Softwarekomponente;
- Figur 4: eine Ausführungsform zur Signalmanipulation, bei der aus einer Speicherstelle ein Wert gelesen werden soll, welcher durch externe Prozesse verändert werden kann;
- Figur 5: eine Ausführungsform der Erfindung zur Signalinjektion und zum Tunneling;
- Figur 6: eine Ausführungsform der Erfindung zur Emulierung mehrerer Aufrufe einer Softwarekomponente.

In den unterschiedlichen Zeichnungen werden gleiche Bezugszeichen und Bezeichnungen für gleiche Elemente verwendet.

### DETAILLIERTE BESCHREIBUNG

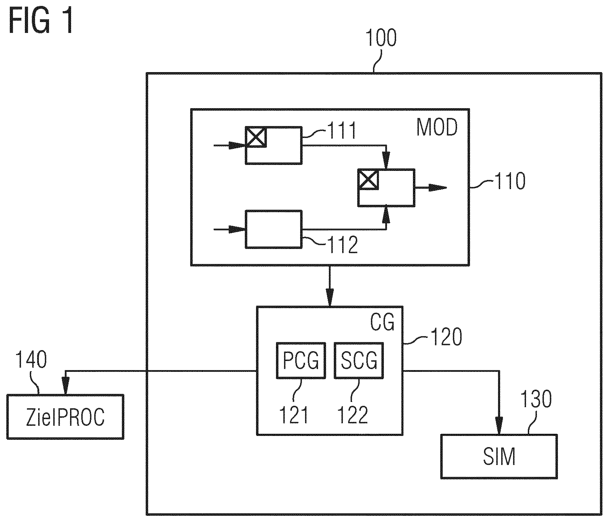

Fig. 1 zeigt schematisch den Aufbau einer modellbasierten Umgebung 100 zum Entwickeln und Testen von Steuerprogrammen, insbesondere von Steuerprogrammen für Steuergeräte.

Die modellbasierte Entwicklungs- und Testumgebung 100 umfasst einen Codegenerator (CG) 120 und einen Simulator (SIM) 130.

Darüber hinaus kann die Entwicklungs- und Testumgebung einen Modelleditor (MOD) 110 umfassen. Der Modelleditor 110 kann eine graphische Benutzeroberfläche zum Erstellen und Ändern von Blockdiagrammen bereitstellen, die vorzugsweise das dynamische, zeitabhängige Verhalten eines Systems oder Programms beschreiben, beziehungsweise modellieren. Die Blöcke können beispielsweise endliche Programmzustände und Bedingungen für Übergänge zwischen den Zuständen beschreiben, in Anlehnung an Stateflow, oder aber auch Operationen auf Signalen, die zyklisch mit einer vorgegebenen Häufigkeit durchgeführt werden, wie aus Simulink bekannt.

Ein Block kann eine atomare Operation beschreiben, wie beispielsweise eine arithmetische Berechnung oder einen logischen Ausdruck, oder er kann ein Subsystem darstellen, das durch ein weiteres Blockdiagramm in einer untergeordneten Hierarchieebene näher beschrieben wird. Dadurch wird die Funktionalität eines hierarchischen Blocks durch eine Vielzahl von Blöcken in einer untergeordneten Ebene definiert.

Alternativ kann er Code in einer Programmiersprache enthalten, insbesondere einer dynamischen Sprache, die für die mathematische Programmierung vorgesehen ist und die Funktionalität des Blocks realisiert. Mehrere Blöcke können durch Signale für den Datenaustausch verbunden werden. So kann beispielsweise ein Ausgangsblock ein Signal vom Typ Single als Eingangssignal empfangen (mit anderen Worten, ein Blockparameter für die Codegenerierung), das Signal z.B. durch Hinzufügen einer Konstanten modifizieren und ein Ausgangssignal vom Typ Double an einen weiteren Block senden. Mit anderen Worten, zwei Blöcke können durch einen Signalweg oder eine Signallinie verbunden werden, so dass Daten vom ersten Block zum weiteren Block fließen, wie beispielsweise aus Simulink bekannt.

Erfindungsgemäß bietet der Modelleditor 110 dem Benutzer die Möglichkeit, bestimmte Blöcke mit einem Simulationscode-Attribut zu kennzeichnen, um dadurch attribuierte Blöcke (Block 111), die für Simulationszwecke verwendet werden, von Blöcken (Block 112) zu unterscheiden, die ausschließlich zur Generierung von Produktionscode dienen.

Diese Attribuierung der Blöcke wird durch den Codegenerator (CG) 120 berücksichtigt. Der Codegenerator 120 ermöglicht die Erstellung von Quellcode aus den Blöcken des durch den Modelleditor 110 erstellten Blockdiagramms. Bedingt durch die erfindungsgemäße Attributierung der Blöcke auf Modellebene, enthält der generierte Quellcode sowohl Simulationscodeanteile als auch Produktionscodeanteile, die den jeweiligen Blöcken entsprechen. Vorzugsweise kann der Codegenerator 120 modular aufgebaut sein, umfassend ein Modul (PCG) 121 zur Generierung von Produktionscode und ein Modul (SCG) 122 zur Generierung von Simulationscode. Denkbar ist jedoch auch, beide Funktionalitäten durch ein einzelnes Modul bereitzustellen.

Sowohl der Produktionscodeanteil als auch der Simulationscodeanteil können nach unterschiedlichen Kriterien optimiert werden. So kann der Code beispielsweise hinsichtlich Lesbarkeit, Rückverfolgbarkeit, Sicherheit, geringen Energieverbrauchs, Ausführungsgeschwindigkeit und/oder Speicherbedarfs optimiert werden. Vorzugsweise stellt der Codegenerator eine Benutzerschnittstelle zum Einstellen einer Vielzahl von Optionen zum Anpassen des erzeugten Codes zur Verfügung. Anpassungsoptionen können zielspezifische Optimierungen für den Mikrocontroller des eingebetteten Programms und die Durchsetzung der Konformität des generierten Codes mit einem bestimmten Standard, wie beispielsweise den MISRA C-Richtlinien, beinhalten. Ein besonders bevorzugter Codegenerator (CG) ist TargetLink von dSPACE.

Der Simulator (SIM) 130 kann eingerichtet werden, um ein im Modelleditor 110 erstelltes Blockdiagramm auszuführen, um das zeitliche Verhalten des durch das Blockdiagramm beschriebenen dynamischen Systems zu beobachten. Dabei kann der Simulator 130 dazu eingerichtet werden, sowohl eine Software-in-the-Loop als auch eine Model-in-the-Loop Simulation durchzuführen. Im ersten Fall wird die Software-in-the-Loop Simulation unter Berücksichtigung des durch den Codegenerator 120 erstellten Simulationscodes durchgeführt. Für bestimmte Modellblöcke kann jedoch auch eine Model-in-the-Loop-Simulation durch direktes Ausführen der Blöcke durchgeführt werden. Mit einer Model-in-the-Loop-Simulation kann die Korrektheit auf Modellebene überprüft werden, d.h., ob die während der Simulation ausgeführten Blöcke das beabsichtigte Verhalten des Steuerprogramms tatsächlich beschreiben. Dabei kann das ganzen Modell als Model-in-the-Loop-Simulation ausgeführt werden. Jedoch können aber auch nur bestimmte Modellabschnitte, wie beispielsweise ein Streckenmodell, im Model-in-the-Loop-Simulationsmodus ausgeführt werden, während andere Modellabschnitte, wie beispielsweise ein Reglercode, im Software-in-the-Loop Simulationsmodus ausgeführt werden.

Nach einer erfolgreichen Durchführung der Simulation kann der Simulationscodeanteil aus dem Quellcode entfernt werden. Der Quellcode, der nun ausschließlich Produktionscode enthalten kann, wird vorzugsweise kompiliert, um auf einem Zielprozessor 140, insbesondere auf einem Prozessor eines Steuergeräts, ausgeführt werden zu können.

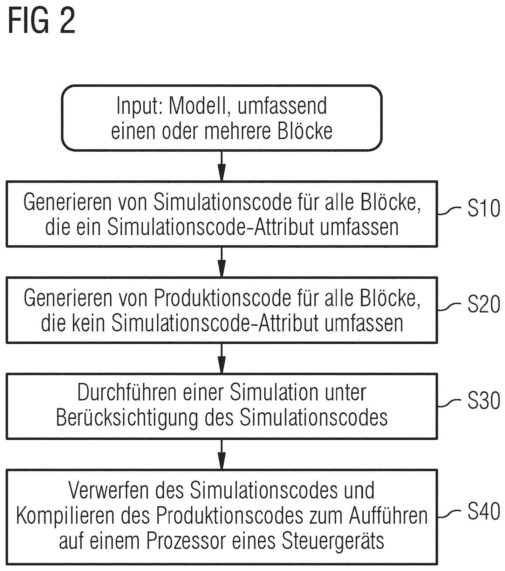

Fig. 2 ist ein Blockdiagramm, welches das erfindungsgemäße Verfahren zum Erzeugen von Quellcode aus einem Modell verdeutlicht. Das Verfahren kann auf der in Fig. 1 dargestellten Umgebung 100 ablaufen. Das Verfahren wird auf einem mit dem Modelleditor 110 zusammengestellten Modell gestartet. Das Verfahren aus Fig. 2 wird dabei für jeden der Blöcke im Modell ausgeführt. Der Codegenerator 120 erzeugt in demselben Durchlauf sowohl Produktions- als auch Simulationscode. Dabei wird für Blöcke, die ein Simulationscode-Attribut umfassen, Simulationscode generiert (Schritt S10), und für Blöcke die kein Simulationscode-Attribut umfassen wird Produktionscode generiert (Schritt S20).

Durch die Möglichkeit Blöcke mit einem Simulationscode-Attribut zu versehen und dieses in jedem Codegenerierungsdurchlauf erneut setzen zu können, kann der gleiche Block in einem Durchlauf als Produktionsblock und in einem anderen Durchlauf als Simulationsblock eingesetzt werden.

In einem weiteren Schritt S30 wird eine Simulation unter Berücksichtigung des Simulationscodes durchgeführt. Vorzugsweise umfasst dieser Schritt eine Software-in-the-Loop (SIL) Simulation. Jedoch kann für bestimmte Modelblöcke zusätzlich eine Model-in-Loop (MIL) Simulation durchgeführt werden. Bekannte Simulationsumgebungen, wie beispielsweise TargetLink, können hierzu eingesetzt werden. TargetLink stellt, in Zusammenarbeit mit MATLAB/Simulink dafür verschiedene Simulationsmodi zur Verfügung. Die MIL Simulation dient dabei insbesondere als Referenz für die SIL Simulation.

Die SIL Simulation kann unter Berücksichtigung des Simulationscodes und gegebenenfalls der Ergebnisse der MIL Simulation auf einem Host-PC durchgeführt werden, um dadurch das Verhalten des generierten Codes mit den während der MIL Simulation gewonnenen Referenzdaten zu vergleichen.

Zusätzlich zu der MIL und der SIL Simulation, kann weiter eine Prozessor-in-the-Loop (PIL) Simulation ausgeführt werden. Diese kann auf einem Evaluierungsboard erfolgen, das mit einem Prozessor ausgestattet ist, der dem Prozessor auf dem Steuergerät entspricht. Durch den kombinierten Einsatz der drei Simulationsmodi kann die Korrektheit des generierten Quellcodes sichergestellt werden.

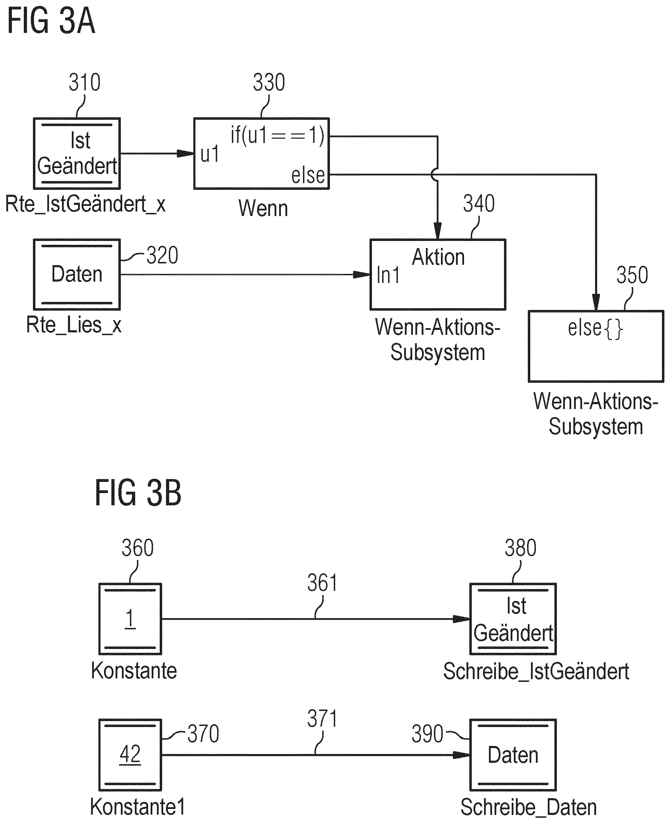

Die Figuren 3A bis 3C zeigen eine Ausführungsform gemäß der Erfindung, in welcher ein Runnable einer Softwarekomponente eines AUTOSAR-Systems beschrieben wird. Hierbei wird der Einfluss eines parallel ausgeführten Runnables einer weiteren Softwarekomponente auf das in dem Simulink-Modell beschriebene Runnable simuliert. Grundannahme ist, dass die gezeigten Blockgruppen in der in den Gruppen angegebenen Reihenfolge ausgeführt werden. Dies kann in MATLAB/Simulink mittels Block-Prioritäten geregelt werden.

Fig. 3A zeigt ein Simulink-Modell, das folgendes Verhalten beschreibt: Der Wert eines Datenelements x wird durch den "Data Store Read" Block Rte_Lies_x 320 aus dem (hier nicht gezeigten) "Data Store Memory" Block gelesen. Gleichzeitig wird aus einem weiteren "Data Store Memory" Block durch den "Data Store Read" Block Rte_IstGeändert_x 310 ein Wert gelesen, der angibt ob sich der Wert des Datenelements x geändert hat. Vorzugsweise handelt es sich dabei um einen Booleschen Wert. Falls sich der Wert geändert hat, Block 330, wird eine durch den Block 340 spezifizierte Aktion ausgeführt. Falls der Wert des Datenelements unverändert geblieben ist, wird die durch den Block 350 spezifizierte Aktion ausgeführt.

Dabei wird der Wert des Datenelements x durch ein Runnable einer parallel ausgeführten SW Komponente geändert. Das Verhalten dieser weiteren SW Komponente wird durch das Modell in Fig. 3B beschrieben. Alle vier Blöcke in Fig. 3B sind als Simulationsblöcke attributiert, d.h., sie sind mit einem Simulationscode-Attribut versehen. Die Blöcke 360 und 370 generieren jeweils ein Ausgangssignal mit einem kon**stanten** Wert, wobei die Ausgangssignale als Eingangssignale 361, 371 an die Blöcke 380 bzw. 390 weitergeleitet werden. Die Signallinie 371 modelliert das Schreiben eines neuen Wertes von x, d.h., der neue Wert des Datenelements x wird durch den "Data Store Write" Block Schreibe_Daten 390 in dem (hier nicht gezeigten) "Data Store Memory" Block geschrieben. Die Signallinie 361 modelliert ein entsprechendes Ändern des Zustandes des "Data Store Write" Blocks Schreibe_IstGeändert 380 , wodurch ein neuer Wert in dem Data Store Memory Block geschrieben wird, der angibt, ob sich der Wert des Datenelements x geändert hat.

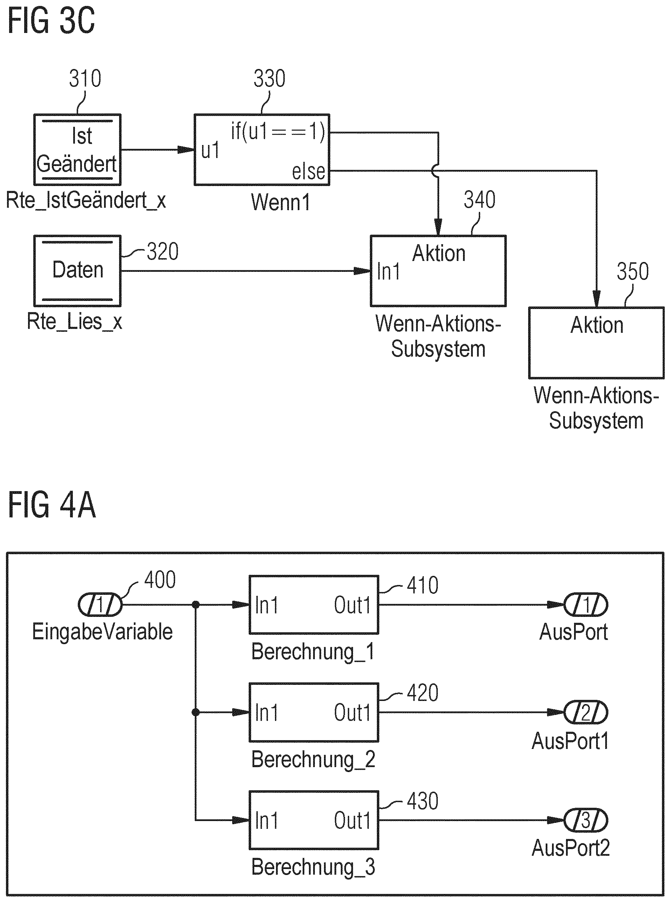

Fig. 3A und Fig. 3C zeigen Teile desselben Runnables, welche nacheinander ausgeführt werden. Fig. 3B zeigt einen Modellanteil, der den Einfluss eines weiteren parallel ausgeführten Runnables modelliert und zwischen den Modellanteilen in Fig. 3A und Fig. 3C ausgeführt wird. Fig. 3C zeigt Modellanteile, welche durch das parallel ausgeführte Runnable beeinflusst werden.

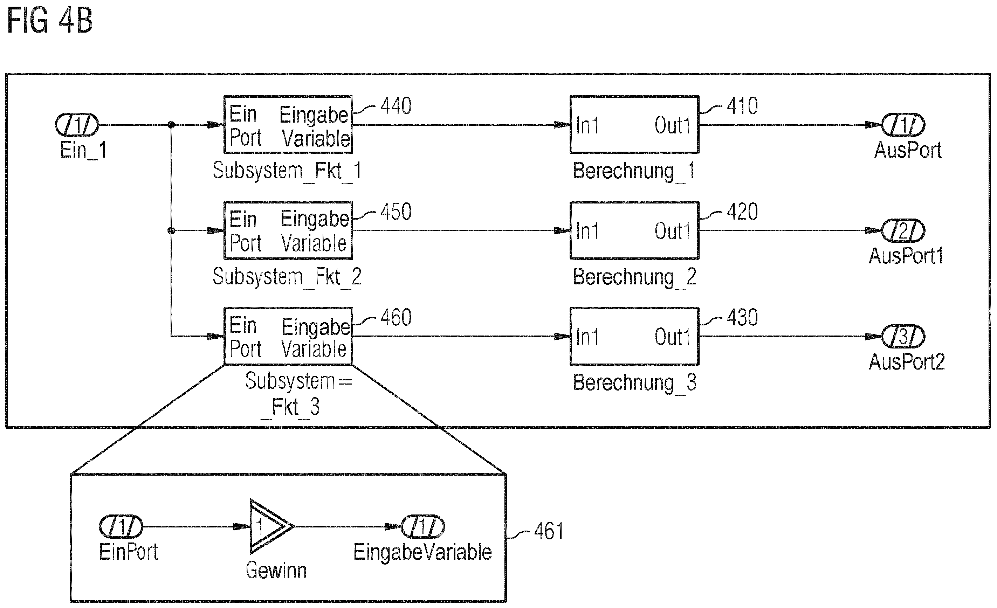

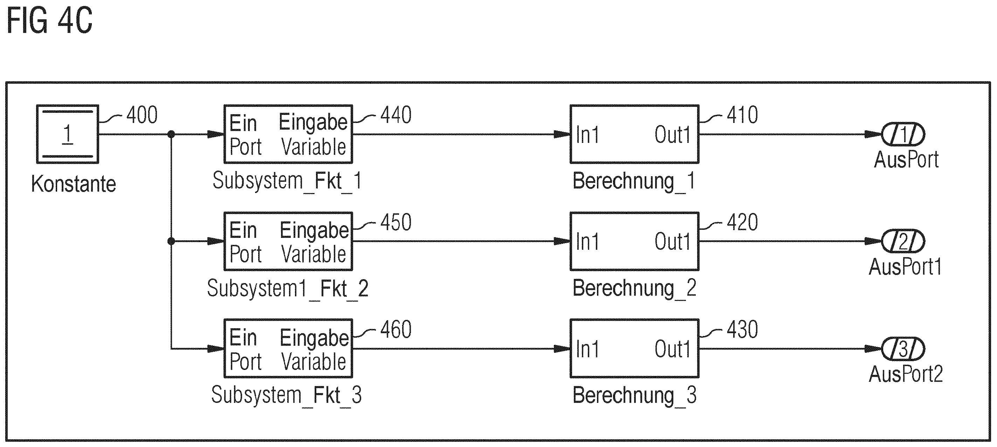

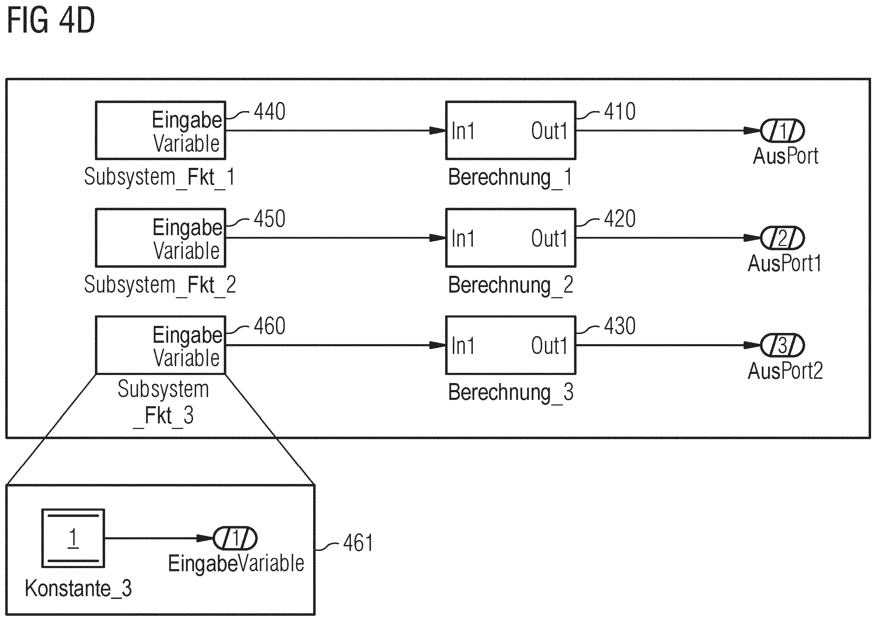

Weitere Ausführungsformen der Erfindung mit Beispielen zur Generierung von Quellcode, werden in die Figuren 4 bis 6 dargestellt.

Die in den Figuren 4A bis 4D gezeigte Ausführungsform stellt ein Beispiel zur Signalmanipulation dar, bei der aus einer Speicherstelle ein Wert gelesen werden soll, welcher durch externe Prozesse verändert werden kann.

Fig. 4A illustriert die konventionelle Modellierung, bei der ausschließlich aus den Blöcken 410, 420, 430 Produktionscode generiert wird, in Form von:
Int16 volatile * pEingabeVariable = (Int16 volatile *) 0x1111;
AusPort_Var = Berechnung_1(*pEingabeVariable);
AusPort1_Var = Berechnung_2(*pEingabeVariable);
AusPort2_Var = Berechnung_3(*pEingabeVariable);

**Der Wert** der Variable EingabeVariable wird über den Port 400 eingelesen, und ist somit für alle weiteren Berechnungen in den Blöcken 410, 420, 430 festgelegt. Eine Simulation lässt sich nur dadurch realisieren, dass die Variable EingabeVariable für jeden Simulationsschritt mit einem neuen Wert über den Port 400 überschrieben wird. Mit diesem gleichen Wert werden aber alle Berechnungen (Berechnung_1 bis Berechnung_3) durchgeführt. Mit dem obigen Ansatz lässt sich daher nicht simulieren, dass sich der Wert von EingabeVariable innerhalb eines Abtastschritts ändert, um jede Berechnung mit einem anderen Wert der EingabeVariable durchführen zu können.

Diese Flexibilität lässt sich durch die erfindungsgemäße Attributierung von Blöcken als Simulationsblöcke erreichen. Fig. 4B zeigt eine erfindungsgemäße Erweiterung des Modells aus Fig. 4A, bei der zusätzliche Simulationsblöcke, d.h. mit einem Simulationscode-Attribut versehene Blöcke 440, 450, 460 hinzugefügt werden. Für diese Blöcke wird jeweils Simulationscode generiert, für die übrigen Blöcke 410, 420, 430 wird Produktionscode generiert.

Die mittels des Simulationscode-Attributs gekennzeichneten Blöcke werden in einer darunterliegenden Modellebene jeweils durch weitere Blöcke 461 näher spezifiziert. So kann der Benutzer in dem Block 461, der das Subsystem Subsystem_Fkt_<n> spezifiziert, unterschiedliche Algorithmen modellieren, welche das Eingangssignal transformieren.

In diesem Beispiel wird ausgenutzt, dass Ports als Übergangsblöcke zwischen Simulations- und Produktionscode genutzt werden dürfen. Die in Fig. 4A als InputPort modellierte EingabeVariable dient bei der erfindungsgemäßen Modellierung in Fig. 4B als Grenze zwischen den Simulationscodeblöcken 440, 450, 460 und den Produktionscodeblöcken 410, 420, 430.

**Aus** dem in Fig. 4B dargestellten Modell wird durch das Verfahren gemäß Fig. 2 folgender Quellcode generiert:

```
 Int16 volatile * pEingabeVariable = (Int16 volatile *) 0x1111;
 #ifdef SIMULATION
 /* Berechnung des Subsystems: Subsystem_Fkt_1 */
 *pEingabeVariable = <Subsystem_Fkt_1> (In1_1);
 #endif
 AusPort_Var = Berechnung_1(*pEingabeVariable);
 #ifdef SIMULATION
 /* Berechnung des Subsystems: Subsystem_Fkt_2 */
 *pEingabeVariable = <Subsystem_Fkt_2>(In1_1);
 #endif
 AusPort1_Var = Berechnung_2(*pEingabeVariable);
 #ifdef SIMULATION
 /* Berechnung des Subsystems: Subsystem2_Fkt_3 */
 *pEingabeVariable = <Subsystem _Fkt_3>(In1_1);
 #endif
 AusPort2_Var = Berechnung_3(*pEingabeVariable);
```

Der obige Quellcode enthält sowohl Simulationscodeanteile als auch Produktionscodeanteile. Die Simulationscodeanteile sind von den Produktionscodeanteilen ab**trennbar** mittels der Präprozessor-Anweisungen (#ifdef,#endif) markiert, beziehungsweise ausgeklammert.

Im Gegensatz zu dem Quellcode, welcher aus dem Modell in Fig. 4A generiert wurde, ermöglicht der obige Code den Wert der EingabeVariable während eines einzelnen Simulationsschritts zu ändern. Dabei wird der neue Wert mithilfe der Blöcke 440, 450, 460, 461 berechnet. In dem generierten Code File wird der Code für diese Blöcke als Simulationscode ausgeprägt.

Eine alternative Modellierung der Ausführungsform aus Fig. 4B wird in Fig. 4C dargestellt. Anstatt eines EinPort-Blocks auf der obersten Ebene (In1_1), wie in Fig. 4B verwendet, kann auch ein Konstante-Block 400 verwendet werden. Anstelle des Konstante-Blocks könnte auch ein "Data Store Read"-Block verwendet werden (und ein entsprechender "Data Store Memory"-Block definiert werden). Dadurch muss der Eingang für die Subsysteme Subsystem_Fkt_1 bis Subsystem_Fkt_3 nicht zwingend bis zu dem Root Subsystem geführt werden, wie im Falle des Modellierungsansatzes aus Fig. 4B. Stattdessen kann die Änderung des gespeicherten Werts durch Signalinjektion erfolgen, die der Benutzer in einem getrennten Modellteil vornimmt. Beispielsweise kann die Codegenerierung nur für ein TargetLink-Subsystem erfolgen, während die Signaländerung außerhalb modelliert wird.

Es ist auch möglich, die unterschiedlichen Werte der EingabeVariable direkt anzugeben, wie in der alternativen Ausführungsform der Fig. 4D dargestellt. Darin werden drei Werte für die EingabeVariable direkt als Konstanten 1, 2 und 3 über jeweils drei Simulationsblöcke 440, 450 und 460 und die jeweiligen Subsystem-Blöcke 461 festgelegt.

Aus dem Modell in Fig. 4D wird mittels des erfindungsgemäßen Verfahrens folgender Quellcode generiert:

```
 Int16 volatile * pEingabeVariable = (Int16 volatile *) 0x1111;
 #ifdef SIMULATION
 /* Definiere die Output-Variable des Blocks Konstante */
 Int16 Konstante_1_Var = 3;
 Int16 Konstante_2_Var = 2;
 Int16 Konstante_3_Var = 1;
 #endif
 ...
 #ifdef SIMULATION
 /* Berechnung des Subsystems: Subsystem_Fkt_1 */
 *pEingabeVariable = Konstante_1_Var;
 #endif
 AusPort_Var = Berechnung_1(*pEingabeVariable);
 #ifdef SIMULATION
 /* Berechnung des Subsystems: Subsystem_Fkt_2 */
 *pEingabeVariable = Konstante_2_Var;
 #endif
 AusPort1_Var = Berechnung_2(*pEingabeVariable);
 #ifdef SIMULATION
 /* Berechnung des Subsystems: Subsystem2_Fkt_3 */
 *pEingabeVariable = Konstante_3_Var;
 #endif
 AusPort2_Var = Berechnung_3(*pEingabeVariable);
```

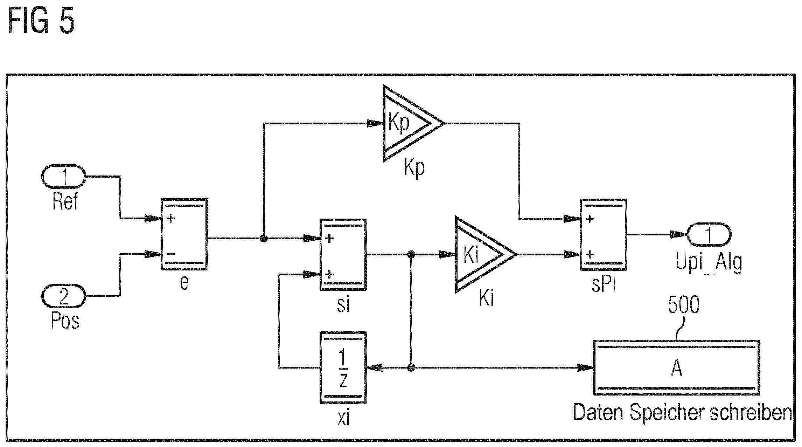

Für jeden neuen Simulationsschritt kann der neue Wert der Konstante_1_Var bis Konstante_3_Var über einen Signalinjektion-Mechanismus gesetzt werden. Dieses Schreiben kann auf ähnliche Weise erfolgen, wie dies für das Lesen im Folgenden mit Bezug auf die in der Figur 5 gezeigte Ausführungsform erläutert wird.

Fig. 5 zeigt die Ausgangssituation einer erfindungsgemäßen Ausführungsform zum Tunneling, die entsprechend auch für die Signalinjektion einsetzbar ist.

Der Daten Speicher schreiben Block 500 wird als Simulationsblock markiert und die Simulationsvariable, die für den Data Store Write Block generiert wird, als globale Variable deklariert.

Dies wird durch den folgenden Quellcode verdeutlicht, der mittels des erfindungsgemäßen Verfahrens gemäß Fig. 2 aus dem Modell aus Fig. 5 erzeugt wird.

```
 #ifdef SIMULATION
 <DataType> DatenSpeicherschreibenVariable;
 #endif
 Void foo(void)
 {
 <DataType> ZuTunnelndeVariable ...
 /* Berechne den Wert der lokalen Produktionscodevariable
 ZuTunnelndeVariable */
 ZuTunnelndeVariable = ....
 #ifdef SIMULATION
 DatenSpeicherschreibenVariable = ZuTunnelndeVariable;
 #endif
 }
```

Der obige Quellcode enthält sowohl Simulationscodeanteile als auch Produktionscodeanteile. Der Simulationscode enthält eine globale Simulationsvariable, DatenSpeicherschreibenVariable, deren Wert durch einen in dem Produktionscode berechneten Wert einer lokalen Variablen ZuTunnelndeVariable bestimmt wird.

Mit dem Ansatz der erfindungsgemäßen Attributierung bestimmter Blöcke als Simulationscodeblöcke lassen sich lokale Variablen lesen beziehungsweise schreiben.

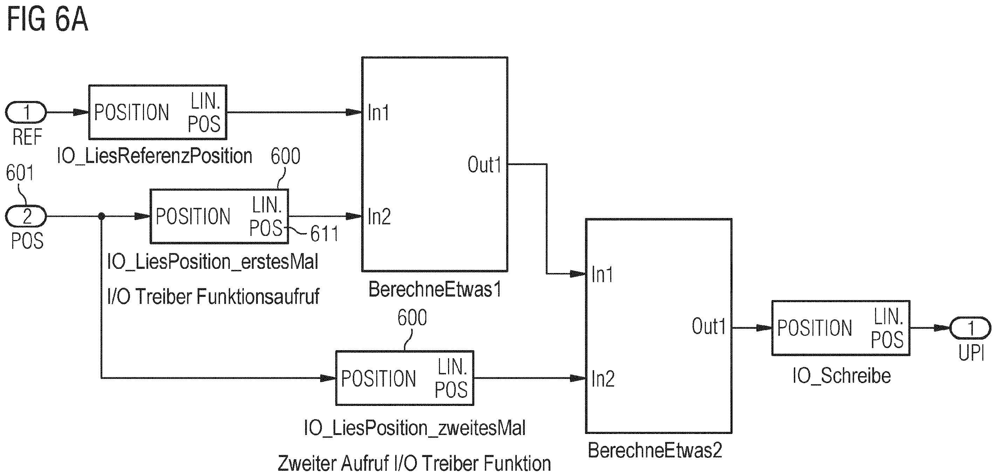

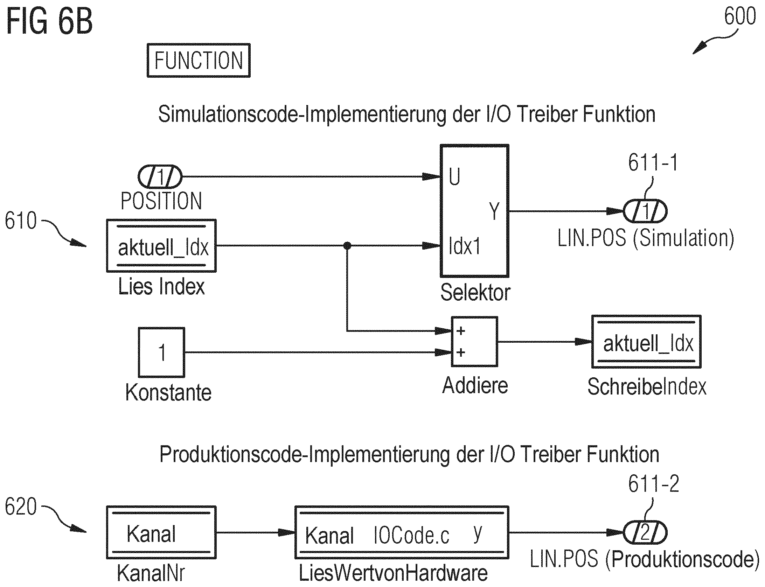

Eine weitere Ausführungsform der Erfindung wird in den Figuren 6A und 6B gezeigt. Bei dieser Ausführungsform sind mehrere Aufrufe einer Softwarekomponente, insbesondere eines Treibers, in dem Model mittels Simulationsblöcken integriert, wie durch die Blöcke 600 in Fig. 6A gezeigt. Dabei kann das Pos-Signal 601 als Vektor gestaltet werden, dessen verschiedene Elemente jeweils den Wert für einen Treiberaufruf liefern. Die Implementierung des Treibers wird durch Simulationscode emuliert.

Fig. 6B zeigt das Subsystem 600 für den Treiberaufruf, umfassend einen Simulationscode-Abschnitt 610 und einen Produktionscode-Abschnitt 620. Dieses Subsystem 600 kann dann jeweils als Selektion des entsprechenden Abschnitts implementiert werden, um die Variable LinPos 611 mit verschiedenen Werten zu beschreiben, nämlich einem Wert 611-1 für Produktionscode und einem Wert 611-2 für Simulationscode. Die Variable LinPos wird somit als Outport mit zwei Identitäten modelliert, d.h. für die Verwendung in dem Produktionscode 611-1 sowie für die Verwendung in dem Simulationscode 611-2.

Für eine bessere Trennung der Code-Anteile ist zweckmäßigerweise vorgesehen, dass der Simulationscode aus dem Produktionscode-Subsystem "herausgeschoben" wird. Dadurch kann der Simulationscode in eigene Code-Module ausgelagert werden und ein Modul für Produktionscode enthält keine Simulationscode-Anteile.

Das Simulationscode-Modul für den Treiberaufruf enthält beispielsweise den folgenden Codeabschnitt, der aus dem Simulationscode-Abschnitt 610 in Fig. 6B generiert wird.

```
 /**************************************/
 /* Modul IOLies.c - Simulationscode */
 /**************************************/
 Int16 Position[2];
 UInt16 aktuell _Idx = 0;
 Void IO_LiesPosition(Int16 * LinPos)
 {
      *LinPos = Position[aktuell_Idx];
      aktuell _Idx += 1;
```

Das Produktionscode-Modul für den Treiberaufruf enthält beispielsweise den folgenden Codeabschnitt, der aus dem Produktionscode-Abschnitt 620 in Fig. 6B generiert wird.

```
 **************************************
 /* Modul IOLies.c - Produktionscode */
 **************************************
 CAL UInt16 Kanal = 3;
 void IOLiesPosition(Int16 * LinPos)
 {
      *LinPos = LiesWertvonHardware(Kanal);
 }
```

Weitere Untermodule, wie beispielsweise ein Modul zur Initialisierung und ein Modul für die einzelnen Funktionsaufrufe, können ebenfalls generieret werden.

```
Initialisierung - Stub-Modul 1:
 Pos[0] = 1;
 Pos[1] = 2;
 ...
 Pos[n]=123;
 Stub-Funktion - Stub-Modul 2:
 IOLiesPosition(&LinPos, IO_Kanal_3)
 {
 static LiesIdx = 0;
 LinPos = Pos[LiesIdx];
 LiesIdx += 1;
 }
```

Produktionscode mit Aufruf des I/O Treibers:

```
 ...
 #include IOLies.h
 void meinProdCode ()
 {
 ...
 /* erster Aufruf I/O Treiber */
 IOLiesPosition(&LinPos, IO_Kanal _3);
 /* Starte Berechnung - BerechneEtwas1 */
 ...
 /* zweiter Aufruf I/O Treiber */
 IOLiesPosition(&LinPos, IO_CHANNEL _3);
 /* Setze Berechnung fort - BerechneEtwas2 */
 ...
 };
```

Das Initialisierungsmodul ist Teil des Simulationscodes und dient dazu, Parameter und/oder Variablen der emulierten Komponente (beispielsweise des Treibers 600 in Fig. 6B) zu initialisieren. Das Funktionsmodul enthält Stub-Funktionen der emulierten Komponente, wobei Funktionsaufrufe einer oder mehreren Stub-Funktionen im Produktionscode erfolgen.

Um mehrere Aufrufe des I/O Treibers beschreiben zu können, müssen dem Eingangsport 601 in Fig. 6A mehrere Werte zugewiesen werden. In einer Ausführungsform wird der Eingang mit einem Array verbunden, welches verschiedene Variablen bzw. Werte als direkte Eingangsgrößen enthält, zwischen denen je nach der Anzahl bisheriger Aufrufe umgeschaltet wird.

Vorzugsweise kann das Initialisierungsmodul eine Index-basierte Datenstruktur, insbesondere einen Array, umfassen, die eine Mehrzahl von Werten einer Variablen definiert, wobei bei jedem Funktionsaufruf einer Stub-Funktion in den Produktionscode über den Index auf einzelne Werte der Variable zugegriffen wird. Beispielsweise enthält im obigen Quellcode das Initialisierungsmodul stub-Modul 1 ein Array Pos der Länge n, wobei die einzelnen Felder mit Werten von 1 bis 123 belegt sind.

Alternativ kann es auch vorgesehen sein, Bedingungen für das Umschalten in den Simulationsblöcken explizit zu modellieren.

Weitere Module, wie beispielsweise ein Initialisierungsmodul für Fehlerfälle, können ebenfalls spezifiziert werden, um ein Fehlverhalten einer Komponente zu emulieren.

Darüber hinaus können veränderliche Werte der Variablen Lin.Pos auch außerhalb des Produktionscode-Subsystems mit Simulink-Blöcken modelliert werden.

Durch einen Austausch der eingebundenen Header-Dateien (bzw. durch ein Binden an die entsprechende Bibliothek) kann zwischen Simulationscode für den Test und dem im Steuergerät aufzurufenden Treiber gewechselt werden.

## Patentansprüche

1. Verfahren zum Erzeugen von Quellcode aus einem Modell, wobei das Modell einen oder mehrere Blöcke (111; 112; 310; 320; 330; 340; 350; 360; 370; 380; 390; 400; 410; 420; 430; 440; 450; 460; 500; 600) umfasst, die ein gewünschtes Verhalten eines Steuerprogramms spezifizieren, **dadurch** definiert, dass zumindest einer der Blöcke ein Simulationscode-Attribut umfasst,
wobei das Verfahren die Schritte umfasst:
- Generieren (S10) von Simulationscode für alle Blöcke, die ein Simulationscode-Attribut umfassen;
- Generieren (S20) von Produktionscode für alle Blöcke, die kein Simulationscode-Attribut umfassen;
- Durchführen (S30) einer Software-in-the-Loop Simulation unter Berücksichtigung des Simulationscodes zur Testung des Produktionscodes;
Verwerfen (S40) des Simulationscodes und Kompilieren des Produktionscodes zum Ausführen auf einem Prozessor (140) eines Steuergeräts;wobei der Simulationscode und der Produktionscode innerhalb eines einzelnen Durchlaufs des Codegenerators erzeugt werden und im Quellcode voneinander abtrennbar enthalten sind.

2. Verfahren nach Anspruch 1, **dadurch gekennzeichnet, dass** der Simulationscode mittels Präprozessor-Anweisungen in den Quellcode integriert ist.

3. Verfahren nach Anspruch 1 oder 2, **dadurch gekennzeichnet, dass** der Simulationscode von dem Produktionscode getrennt in einem Code-Modul oder einer Code-Datei hinterlegt ist.

4. Verfahren nach einem der Ansprüche 1 bis 3, **dadurch gekennzeichnet, dass** ein ein Simulationscode-Attribut umfassender Block mindestens ein weiteres Attribut umfasst, das bei der Generierung von Simulationscode berücksichtigt wird.

5. Verfahren nach Anspruch 4, **dadurch gekennzeichnet, dass** der Schritt (S20) des Generierens von Simulationscode einen Codeoptimierungsschritt unter Berücksichtigung des mindestens eines weiteren Attributs umfasst.

6. Verfahren nach einem der Ansprüche 1 bis 5, **dadurch gekennzeichnet, dass** der Schritt (S20) des Generierens von Simulationscode ein Generieren einer Stub-Funktion umfasst, wobei die Stub-Funktion eine mit dem Programm in Wechselwirkung tretende Komponente durch den entsprechenden Simulationscode emuliert.

7. Verfahren nach einem der Ansprüche 1 bis 6, **dadurch gekennzeichnet, dass** der Schritt (S20) des Generierens von Simulationscode ein Generieren von Funktionsaufrufen zum Transformieren eines Eingangssignals umfasst.

8. Verfahren nach Anspruch 7, **dadurch gekennzeichnet, dass** der Simulationscode die Funktionsaufrufe ersetzt, die einer in dem Produktionscode vorkommenden lokalen Variablen einen Wert zuweisen.

9. Verfahren nach einem der Ansprüche 1 bis 8, **dadurch gekennzeichnet, dass** der Simulationscode eine globale Simulationsvariable enthält, deren Wert durch einen in dem Produktionscode berechneten Wert einer lokalen Variablen bestimmt wird.

10. Verfahren nach einem der Ansprüche 1 bis 9, **dadurch gekennzeichnet, dass** der Produktionscode eine lokale Variable enthält, deren Wert durch einen in dem Simulationscode berechneten Wert einer globalen Variable bestimmt wird.

11. Verfahren nach einem der Ansprüche 1 bis 10, **dadurch gekennzeichnet, dass** der Simulationscode ein Initialisierungsmodul, das Parameter und/oder Variablen der emulierten Komponente initialisiert, und ein Funktionsmodul zur Aufnahme von Funktionen, insbesondere Stub-Funktionen, der emulierten Komponente enthält, wobei Funktionsaufrufe im Produktionscode erfolgen.

12. Verfahren nach einem der Ansprüche 1 bis 11, **dadurch gekennzeichnet, dass** es weiter die Schritte umfasst:
- Überprüfen, ausgehend von einem ein Simulationscode-Attribut umfassenden ersten Block, ob alle aufeinanderfolgenden Blöcke entlang einer von dem ersten Block bis zu einem als Übergangsblock markierten Block durchgehenden Simulationslinie Simulationscode-Attribute umfassen; und
- Generieren einer Fehlermeldung, falls das Simulationscode-Attribut eines Blocks nicht gesetzt ist.

13. Testumgebung (100) zum Testen von Modellen für Steuerprogramme, wobei ein Modell einen oder mehrere Blöcke (111; 112; 310; 320; 330; 340; 350; 360; 370; 380; 390; 400; 410; 420; 430; 440; 450; 460; 500; 600) umfasst, die ein gewünschtes Verhalten eines Steuerprogramms spezifizieren, **dadurch** definiert, dass mindestens einer der Blöcke ein Simulationscode-Attribut umfasst, wobei die Testumgebung einen Codegenerator (120) zum Erzeugen von Quellcode aus dem Modell umfasst, wobei der Codegenerator (120) dazu eingerichtet ist, für alle Blöcke, die ein Simulationscode-Attribut umfassen, Simulationscode zu erzeugen und für Blöcke die kein Simulationscode-Attribut umfassen, Produktionscode zu erzeugen,
wobei der Simulationscode und der Produktionscode innerhalb eines einzelnen Durchlaufs des Codegenerators erzeugt werden und im Quellcode voneinander abtrennbar enthalten sind, wobei die Testumgebung ferner einen Simulator (130) umfasst, wobei der Simulator (130) dazu eingerichtet ist, eine Software-in-the-Loop Simulation zur Testung des Produktionscodes unter Berücksichtigung der Blöcke mit Simulationscode-Attribut durchzuführen, wobei danach der Simulationscode verworfen und der Produktionscode zum Ausführen auf einem Prozessor eines Steuergeräts kompiliert wird.

## Claims

1. A method for generating source code from a model, the model comprising one or more blocks (111; 112; 310; 320; 330; 340; 350; 360; 370; 380; 390; 400; 410; 420; 430; 440; 450; 460; 500; 600) specifying a desired behavior of a control program, **defined in that** at least one of the blocks comprises a simulation code attribute,
wherein the method comprises the following steps:
- generating (S10) simulation code for all blocks comprising a simulation code attribute;
- generating (S20) production code for all blocks not comprising a simulation code attribute;
- performing (S30) a software-in-the-loop simulation taking into account the simulation code for testing the production code;
discarding (S40) the simulation code and compiling the production code for execution on a processor (140) of a controller; wherein the simulation code and the production code are generated within a single run of the code generator and are contained separably from each other in the source code.

2. The method according to claim 1, **characterized in that** the simulation code is integrated into the source code by means of preprocessor instructions.

3. The method according to claim 1 or 2, **characterized in that** the simulation code is stored separately from the production code in a code module or a code file.

4. The method according to any one of claims 1 to 3, **characterized in that** a block comprising a simulation code attribute comprises at least one further attribute which is taken into account during the generation of simulation code.

5. The method according to claim 4, **characterized in that** the step (S20) of generating simulation code comprises a code optimization step taking into account the at least one further attribute.

6. The method according to any one of claims 1 to 5, **characterized in that** the step (S20) of generating simulation code comprises generating a stub function, wherein the stub function emulates a component interacting with the program by means of the corresponding simulation code.

7. The method according to any one of claims 1 to 6, **characterized in that** the step (S20) of generating simulation code comprises generating function calls for transforming an input signal.

8. The method according to claim 7, **characterized in that** the simulation code replaces the function calls for assigning a value to a local variable occurring in the production code.

9. The method according to any one of claims 1 to 8, **characterized in that** the simulation code contains a global simulation variable having a value determined by a value of a local variable calculated in the production code.

10. The method according to any one of claims 1 to 9, **characterized in that** the production code contains a local variable having a value determined by a value of a global variable calculated in the simulation code.

11. The method according to any one of claims 1 to 10, **characterized in that** the simulation code contains an initialization module, for initializing parameters and/or variables of the emulated component, and a function module for receiving functions, in particular stub functions, of the emulated component, wherein function calls are made in the production code.

12. The method according to any one of claims 1 to 11, **characterized in that** said method further comprises the steps:
- checking, starting from a first block comprising a simulation code attribute, whether all consecutive blocks along a simulation line extending from the first block to a block marked as a transition block comprise simulation code attributes; and
- generating an error message if the simulation code attribute of a block is not set.

13. A test environment (100) for testing models for control programs, wherein a model comprises one or more blocks (111; 112; 310; 320; 330; 340; 350; 360; 370; 380; 390; 400; 410; 420; 430; 440; 450; 460; 500; 600) for specifying a desired behavior of a control program, **defined in that** at least one of the blocks comprises a simulation code attribute, wherein the test environment comprises a code generator (120) for generating source code from the model, wherein the code generator (120) is configured to generate simulation code for all blocks comprising a simulation code attribute and to generate production code for blocks not comprising a simulation code attribute,
wherein the simulation code and the production code are generated within a single run of the code generator and are contained separably from each other in the source code, wherein the test environment further comprises a simulator (130), wherein the simulator (130) is configured to perform a software-in-the-loop simulation for testing the production code taking into account the blocks comprising a simulation code attribute, wherein thereafter the simulation code is discarded and the production code is compiled for execution on a processor of a controller.

## Revendications

1. Procédé de génération de code source à partir d'un modèle, le modèle comprenant un ou plusieurs blocs (111; 112; 310; 320; 330; 340; 350; 360; 370; 380; 390; 400; 410; 420; 430; 440; 450; 460; 500; 600) qui spécifient un comportement souhaité d'un programme de commande, **défini en ce qu**'au moins l'un des blocs comprend un attribut de code de simulation,
le procédé comprenant les étapes suivantes:
- génération (S10) d'un code de simulation pour tous les blocs qui comprennent un attribut de code de simulation;
- génération (S20) d'un code de production pour tous les blocs qui ne comprennent pas d'attribut de code de simulation;
- réalisation (S30) d'une simulation de logiciel dans la boucle en tenant compte du code de simulation pour tester le code de production;
rejet (S40) du code de simulation et compilation du code de production afin de l'exécuter sur un processeur (140) d'un appareil de commande; le code de simulation et le code de production étant générés pendant un cycle individuel du générateur de code et étant contenus dissociables l'un de l'autre dans le code source.

2. Procédé selon la revendication 1, **caractérisé en ce que** le code de simulation est intégré dans le code source au moyen d'instructions de préprocesseur.

3. Procédé selon la revendication 1 ou 2, **caractérisé en ce que** le code de simulation est stocké séparément du code de production dans un module de code ou un fichier de code.

4. Procédé selon l'une des revendications 1 à 3, **caractérisé en ce qu'**un bloc comprenant un attribut de code de simulation comprend au moins un attribut supplémentaire qui est pris en compte lors de la génération du code de simulation.

5. Procédé selon la revendication 4, **caractérisé en ce que** l'étape (S20) de génération de code de simulation comprend une étape d'optimisation de code en prenant en compte l'au moins un attribut supplémentaire.

6. Procédé selon l'une des revendications 1 à 5, **caractérisé en ce que** l'étape (S20) de génération de code de simulation comprend une génération d'une fonction stub, la fonction stub émulant, par le code de simulation correspondant, un composant entrant en interaction avec le programme.

7. Procédé selon l'une des revendications 1 à 6, **caractérisé en ce que** l'étape (S20) de génération de code de simulation comprend une génération d'appels de fonction afin de transformer un signal d'entrée.

8. Procédé selon la revendication 7, **caractérisé en ce que** le code de simulation remplace les appels de fonction qui attribuent une valeur à une variable locale figurant dans le code de production.

9. Procédé selon l'une des revendications 1 à 8, **caractérisé en ce que** le code de simulation contient une variable de simulation globale dont la valeur est déterminée par une valeur d'une variable locale calculée dans le code de production.

10. Procédé selon l'une des revendications 1 à 9, **caractérisé en ce que** le code de production contient une variable locale dont la valeur est déterminée par une valeur d'une variable globale calculée dans le code de simulation.

11. Procédé selon l'une des revendications 1 à 10, **caractérisé en ce que** le code de simulation contient un module d'initialisation qui initialise des paramètres et/ou des variables du composant émulé, et un module fonctionnel destiné à recevoir des fonctions, en particulier des fonctions stub, du composant émulé, les appels de fonction étant effectués dans le code de production.

12. Procédé selon l'une des revendications 1 à 11, **caractérisé en ce qu'**il comprend en outre les étapes suivantes:
- vérification, à partir d'un premier bloc comprenant un attribut de code de simulation, si tous les blocs successifs le long d'une ligne de simulation allant du premier bloc jusqu'à un bloc marqué comme bloc de transition comprennent des attributs de code de simulation; et
- génération d'un message d'erreur si l'attribut de code de simulation d'un bloc n'est pas défini.

13. Environnement de test (100) destiné à tester des modèles pour des programmes de commande, un modèle comprenant un ou plusieurs blocs (111; 112; 310; 320; 330; 340; 350; 360; 370; 380; 390; 400; 410; 420; 430; 440; 450; 460; 500; 600) qui spécifient un comportement souhaité d'un programme de commande, **défini en ce qu**'au moins l'un des blocs comprend un attribut de code de simulation, l'environnement de test comprenant un générateur de code (120) destiné à générer un code source à partir du modèle, le générateur de code (120) étant conçu pour générer un code de simulation pour tous les blocs qui comprennent un attribut de code de simulation et pour générer un code de production pour les blocs qui ne comprennent pas d'attribut de code de simulation,
le code de simulation et le code de production étant générés pendant un cycle individuel du générateur de code et étant contenus dissociables l'un de l'autre dans le code source, l'environnement de test comprenant en outre un simulateur (130), le simulateur (130) étant conçu pour exécuter une simulation de logiciel dans la boucle pour tester le code de production en tenant compte des blocs ayant un attribut de code de simulation, le code de simulation étant ensuite rejeté et le code de production étant compilé pour être exécuté sur un processeur d'un appareil de commande.
